# EUROPEAN PATENT APPLICATION

(11) **EP 2 290 572 A1**
(43) Date of publication of application: **02.03.2011**
(21) Application number: 09015019.4
(22) Date of filing: 03.12.2009
(51) Int. Cl.: G06F 21/00, H04L 29/06

(54) **Process and arrangement for remotely specifiying a user profile**

(30) Priority: 27.08.2009 EP 09011004
(71) Applicant: Holland, Monika, 82041 Deisenhofen (DE); Frisch, Birgitta Maria, 85748 Garching (DE)
(72) Inventor: Holland, Monika, 82041 Deisenhofen (DE); Frisch, Birgitta Maria, 85748 Garching (DE)
(74) Representative: Heinze, Ekkehard

(57) **Abstract**

Process for remotely specifying a profile of a user which, at a user terminal, accesses data files, software and/or services provided in a data or telecommunications network, wherein a plurality of values of different types of input or operating characteristics is determined at an input interface of the user terminal, when the user terminal is connected to the network, and an input characteristics vector is evaluated from the determined characteristics according to a predetermined input characteristics vector evaluation algorithm and remotely stored in a user profile data base connected to the network, associated to an identifier of the user terminal.

## Description

The invention refers to a process and arrangement for remotely specifying a profile of a user which, at a user terminal, accesses data files, software and/or services provided in a data or telecommunications network.

User authentication schemes have, in a wide variety of approaches, been subject of an extensive development during the last decade. Specifically, in line with the growing usage of internet terminals, be it desktop computers, laptops or mobile terminals, which may be accessible to different users, the authentication of a user who requests access to sensitive data or to cost-incurring services has become an important issue in the management of data bases and internet-based services. Besides the use of passwords or PINs or similar knowledge-based authentication instruments, biometrical approaches have been developed and have meanwhile gained significant market shares.

One of these approaches is known as Keystroke Dynamics Approach; see http://en.wikipedia.org/wiki/Keystroke dynamics and www.psylock.com. This approach makes use of the fact that the Keystroke characteristics of users of a computer keyboard are highly unique and, therefore, adequate processing of such characteristics provides for a valid scheme for distinguishing between different users. Meanwhile, this approach has been developed to a useful authentication procedure which can be applied to remote users which, at a user terminal, request access to data files, software and/or services provided in a data or telecommunications network.

It is an object of the present invention to provide a further improved process for remotely specifying or authenticating a user in such environment, as well as to provide a corresponding hardware/software system or arrangement, respectively.

This object is solved by a process according to claim 1 and, regarding the device aspect of the invention, by an arrangement according to claim 13.

It is an aspect of the invention, to physically detect behavioral aspects of how a user operates a computer or, more generally, any kind of terminal which is coupled to a data or telecommunications network, going beyond the mere detection of keystroke characteristics. Therefore, a plurality of values of different types of input or operating characteristics is determined at an input interface of the user terminal, when the user terminal is connected to the network. Based on these values, an input characteristics vector is evaluated from the determined characteristics according to a predetermined input characteristics vector evaluation algorithm and remotely stored in a user profile data base connected to the network, associated to an identifier of the user terminal. Incidentally, the hierarchical and spatial distribution of the respective process steps and corresponding systems components may be varied, according to the requirements of a specific application.

In an embodiment of the invention, during a first time period when the user terminal is connected to the network, a first input characteristics vector is obtained and stored and during a second time period when the user terminal is connected to the network, a second input characteristics vector is obtained and stored. Afterwards, the first and second input characteristics vectors are processed together according to a predetermined user profile processing algorithm and the result of the processing is made subject of a threshold discrimination, so as to verify whether the user in the second time period is the same as the user in the first time period.

Designating the first time period with the widely used term "enrolment" and the second time period with the term "verification", this process is to be recognised as an authentification procedure. However, the use of such process is not limited to typical applications of authentification procedures but goes far beyond, specifically covering a user authentification or user recognition, respectively, in the framework of "free", unprotected network-based services. In such system, the authentication does not serve for the purpose of granting or rejecting access to certain data or services but mainly or exclusively for gaining knowledge as to which person uses the data or services, without requiring an explicit input of personal data, passwords, PINs etc.

In a further embodiment, the plurality of different types of input or operating characteristics is being determined in timely association to a timely corresponding display content of the user terminal. In this embodiment, evaluating the input characteristics vector comprises associating at least part of the input or operating characteristics values to a timely corresponding display content and/or display configuration, by using a display-dependent input characteristics vector evaluation algorithm. This embodiment builds a bridge between the input behaviour or input characteristics of a user and his reception behaviour or reception characteristics, respectively. Insofar, it allows for exploiting display features and the relationships between display features and required (input) responses for the purpose of identifying a specific user. Still further, this embodiment allows to gain valuable insight into the reception behaviour of the users and insofar provides approaches to customer tailored service and content display schemes and user interfaces.

More specifically, in the last-mentioned embodiment the input characteristics vector evaluation algorithm can be loaded. In other words, depending on the origin and nature of the respective application either control data (primary data) regarding the display content or configuration, or detection data (secondary data) are being used to provide for the required association or assignment of input characteristics data to display content or configuration data. Whereas the use of control (primary) data is preferred if the provider of the user specifying procedure is in possession of these data, it may well be sufficient to use detection (secondary) data if primary data regarding the display content and/or configuration are unavailable.

In a further embodiment, the input characteristics vector evaluation algorithm and/or the user profile processing algorithm is based on a discrimination of a predetermined plurality of classes of user behaviour. Similarly, the input characteristics vector and/or user profile may be classified into one of a plurality of predetermined classes of user input or operating behaviour, and the corresponding class may be stored in the data base, associated to an identifier of the user terminal. These closely related embodiments offer commercial users the chance to prepare classified content or services tailored to certain and user types, which can be distinguished on the basis of a detected class of input or operating behaviour. Incidentally, such classification would be useful in "identifying" a specific user among a plurality of possible users of a certain user terminal or determining a so-called "unique user", respectively.

This last-mentioned embodiment provides particularly advantages information schemes, as in improved basis for customer-tailored product and service placement. As knowledge regarding the approximate age and/or sex and/or education level and/or place or region of residence of network users or customers, respectively is important for the providers, it is highly valuable to define certain classes of input or operating behaviour, which are empirically correlated to age, sex or education etc., and to gain knowledge as to which class behaviour a user belongs and which age, sex and educational level etc. he/she, most probably, has. As a matter of fact, with regard to the single person there is some uncertainty in this classification but with regard to a larger population the information obtained on the basis of this embodiment is of high economical value.

Besides the possible use of such information for statistical and advertising purposes, it may be useful for providing improved software-based user interfaces (screen layouts, operating aids) to predetermined user groups, e.g. children, teenagers or senior users.

Still further, in an embodiment of the invention a display content and/or display configuration provided at the user terminal is being adapted to an input characteristics vector which has previously been determined at the same user terminal. In particular, this may provide a start scenario to initiate predetermined input operating steps of the user which are suitable to obtain significant input operating characteristics. This may serve for considerably shortening time which is required to "identify" a specific user.

Preferably, in the data or telecommunications network an application programming interface comprising tools and/or display content or display configuration compilations is provided, for enabling the determination of the values of input operating characteristics and the evaluation and storage of the input characteristics vector. Herein, the application programming interface preferably enables a bidirectional communication within the data or telecommunications network. This is a basic aspect of a useful system architecture, which may be adapted to be under control of a service provider or a network operator or under shared control, possibly embedding the process and system of the present invention in a modular manner. Specifically, in such system the application programming interface (API) is adapted to be used and accessed by authorized providers of data files, software and/or services in the data or telecommunications network, based on a predetermined provider authentication scheme.

In a further embodiment, during a time period when the user terminal is connected to the network and the values of input or operating characteristics are being determined, a display content requesting the user to input personal data is displayed. Personal data which are input in response to this request are being retrieved and stored in the user profile data base, associated to the timely corresponding user input characteristics vector and a user terminal identifier. This way, the detected input or operating characteristics are being associated to a certain user identity (person). This option - which may or may not be admissible and/or useful in certain legal and administrative environments - creates a link between the process and system proposed hereunder and the users' "real" environments.

More specifically, in the framework of the last-mentioned embodiment, when processing a first and second input characteristics vector so as to verify the identity of the user which has provided the first and second input or operating characteristics, personal data associated to the respective input characteristics vector are being compared according to a predetermined comparison scheme and optionally included in the threshold discrimination. As mentioned further above, such threshold discrimination serves for distinguishing between certain possible users of one single user terminal. The embodiment mentioned herein can serve for refining a threshold discrimination procedure with respect to a predetermined plurality of possible users and may help to reduce the processing time, at the same time avoiding any decrease of confidence of the results.

In a further embodiment of the invention, the input characteristics vector evaluation algorithm and the user profile processing algorithm are being dynamically adapted, in response to previously executed user profile specification procedures. In particular, useful procedures are of the type including a respective personal data request and data input and are preferably based on a neuronal network algorithm. Such dynamically adapted processing ensures that the process and system under discussion reliably reflect the most recent input and operating characteristics of the users, taking account of improved skills in handling the respective user terminal, increased experience in certain input or operating steps and procedures, as well as changed preferences in making use of the respective user interface.

Preferred device aspects of the invention are basically in line with the above mentioned process and system aspects and will, therefore, not be presented once again herein below. It should, however, be emphasised that a user profile specification server for executing the input characteristics vector evaluation and/or the user profile processing and a user profile data base plus an algorithm data base for storing the input characteristics vectors or user profiles, respectively, and the input characteristics vector evaluation algorithms or user profile processing algorithms are provided. Preferably, these components are connected in an internet protocol based protected intranet of a user profile management centre.

A further embodiment of the arrangement according to the invention comprises a plurality of application programming interfaces for connecting the user profile specification server or the user profile management centre, respectively, to provider terminals or servers of authorized providers of data files, software and/or services in the data or telecommunications network, in particular via an authorization server.

Relevant input or operating characteristics, which may be used in the framework of the present invention, are e.g. details of how a user moves the mouse and presses the buttons thereon, overlaps between mouse movements and text inputs, details of the typing and cut-and-paste behaviour (including the timing thereof), cursor movements on a predefined screen displaying several relevant display elements (windows, buttons...) etc.. Among useful keyboard or mouse operating characteristics, the velocity and precision of cursor shifts, details of the "click behaviour" (number and duration of clicks, timely relation to cursor shifts...), the usage of the right mouse key or of specific, dedicated mouse keys, mouse-scrolling, the user's specific timing when operating the mouse, details of handling the scroll-line (velocity, pulls, clicks), the choice of a parking position of the cursor when operating the keyboard, the marking-up and copying techniques of the user, the relative use of the keyboard and the mouse (e.g. in scrolling, copying etc), details of the text input behaviour via a computer keyboard or a mobile keyboard (including typical errors, usage of the T9 scheme, use of block capitals and punctuation marks etc.) can be used, as well as data regarding the timing of using the user terminal, e.g. regarding input breaks, on-times/off-times and so forth, or a tone signature representing a sequence of keystrokes on a telephone.

Provided that corresponding sensors are incorporated into the user terminal, even such physical parameters like the touch pressure (impact) and/or multitonch characteristics operating a touch screen or the inclination of a handheld (e.g. mobile telephone) or the distance of an input pen to the screen during certain input steps may be detected and processed for determining the input characteristics vector or a corresponding user profile, respectively. Regarding the "sensor basis" of the proposed process and arrangements, well-known keystroke characteristics detection means and browser features can be exploited, and established web browser events (accessible via JAVA script or Flash etc.), browser add-ons (e.g. Browser Plug-in, Toolbar) are to be mentioned, as well as applications or applets which are installed on a PC or laptop or in a mobile telephone.

Besides such software-based detection means, physical detectors like timers, GPS sensors, inclination sensors, compasses, tone dialling sensors etc can be used. Still further, dedicated detection means (the use of which will typically require the user's consent) can be embedded in an environment for implementing the proposed process, such as a camera to record movements of the user's hand or face.

A specific selection of input means and optionally associated display elements and the respective weights which are assigned to the selected means/elements in the algorithm to evaluate the input characteristics vector will depend on the nature of the user terminal and its user interface but can also depend on further factors, e.g. the display contents and display configuration of a specific application.

The detection of input or operating characteristics may comprise detecting the users' responsive inputs to different display contents and configurations which are offered subsequently during sessions or, alternatively, selectively during several sessions. The responses may be compared in the way of A/B tests, i.e. predetermined offers to different user interfaces and comparing the resulting input or operating characteristics. The results of the comparison may be input values of the classification schemes mentioned further above and may contribute to establish further improved user profiles. Still further, the results of such A/B tests, accumulated for a large number of users of a single class or several classes may be input into provider's statistical data base and be used for improving the appearance and appeal of its website(s) or of elements thereof.

Besides the above-mentioned correlation between display contents and configurations and respective input characteristics and besides the association of personal data to detected input or operating characteristics, it is possible and may be useful to associate the geographical location of a user terminal during a detection period and/or time data (real time, time periods required for certain input procedures etc.) to the input characteristics data. The combined processing of these classes of data may result in a further refined classification of certain user groups and may finally be used by providers for locally and timely controlling their web-based offers.

## Claims

1. Process for remotely specifying a profile of a user which, at a user terminal, accesses data files, software and/or services provided in a data or telecommunications network, wherein a plurality of values of different types of input or operating characteristics is determined at an input interface of the user terminal, when the user terminal is connected to the network, and an input characteristics vector is evaluated from the determined characteristics according to a predetermined input characteristics vector evaluation algorithm and remotely stored in a user profile data base connected to the network, associated to an identifier of the user terminal.

2. Process of claim 1, wherein
during a first time period when the user terminal is connected to the network, a first input characteristics vector is obtained and stored and during a second time period when the user terminal is connected to the network, a second input characteristics vector is obtained and stored and
the first and second input characteristics vectors are processed together according to a predetermined user profile processing algorithm and the result of the processing is made subject of a threshold discrimination, so as to verify whether the user in the second time period is the same as the user in the first time period.

3. Process of claim 1 or 2, wherein
the plurality of different types of input or operating characteristics is being determined in timely association to a timely corresponding display content of the user terminal and wherein evaluating the input characteristics vector comprises associating at least part of the input or operating characteristics values to a timely corresponding display content and/or display configuration, by using a display-dependent input characteristics vector evaluation algorithm.

4. Process of claim 3, wherein
the input characteristics vector evaluation algorithm is being loaded to an input characteristics vector evaluation unit, in response to the output of a predetermined display content and/or display configuration at the user terminal or in response to the detection of a display content and/or display configuration at the user terminal.

5. Process of one of the preceding claims, wherein
the input characteristics vector evaluation algorithm and/or the user profile processing algorithm are based on a discrimination of a predetermined plurality of classes of user behaviour.

6. Process of one of the preceding claims, wherein
the input characteristics vector and/or user profile is being classified into one of a plurality of predetermined classes of user input or operating behaviour, and the corresponding class is stored in the data base, associated to an identifier of the user terminal.

7. Process of one of claims 3 to 6, wherein
a display content and/or display configuration provided at the user terminal is being adapted to an input characteristics vector which has previously been determined at the same user terminal, in particular to initiate predetermined input operating steps of the user which are suitable to obtain significant input operating characteristics.

8. Process of one of the preceding claims, wherein
in the data or telecommunications network an application programming interface comprising tools and/or display content or display configuration compilations is provided, for enabling the determination of the values of input operating characteristics and the evaluation and storage of the input characteristics vector, wherein the application programming interface preferably enables a bidirectional communication within the data or telecommunications network.

9. Process of claim 8, wherein
the application programming interface is adapted to be used and accessed by authorized providers of data files, software and/or services in the data or telecommunications network, based on a predetermined authentication scheme.

10. Process of one of the preceding claims, wherein
during a time period when the user terminal is connected to the network and the values of input or operating characteristics are being determined, a display content requesting the user to input personal data is displayed, and personal data which are input in response to this request are being retrieved and stored in the user profile data base, associated to the timely corresponding user input characteristics vector and a user terminal identifier.

11. Process of claim 10 and one of claims 2 to 9, wherein,
when processing a first and second input characteristics vector so as to verify the identity of the user which has provided the first and second input or operating characteristics, personal data associated to the respective input characteristics vector are being compared according to a predetermined comparison scheme and optionally included in the threshold discrimination.

12. Process of one of the preceding claims, wherein
the input characteristics vector evaluation algorithm and the user profile processing algorithm are being dynamically adapted, in response to previously executed user profile specification procedures, in particular procedures including a respective personal data request and data input and preferably based on a neuronal network algorithm.

13. Arrangement for implementing a process according to one of the preceding claims, comprising a user profile specification server for executing the input characteristics vector evaluation and/or the user profile processing, the user profile data base and an algorithm data base for storing input characteristics vector evaluation algorithms and user profile processing algorithms being connected to the user profile specification server.

14. Arrangement of claim 13, wherein
the user profile specification server and the associated data bases are connected in an internet protocol based protected intranet of a user profile management centre.

15. Arrangement of claim 13 or 14,
comprising a plurality of application programming interfaces for connecting the user profile specification server or the user profile management centre, respectively, to provider terminals or servers of authorized providers of data files, software and/or services in the data or telecommunications network, in particular via an authorization server.
